(19) Europäisches Patentamt
European Patent Office
Office européen des brevets

(11) Veröffentlichungsnummer: **0 302 488 B1**

(12) **EUROPÄISCHE PATENTSCHRIFT**

(45) Veröffentlichungstag der Patentschrift:
25.09.91 Patentblatt 91/39

(51) Int. Cl.⁵: **G01M 17/02**

(21) Anmeldenummer: 88112680.9

(22) Anmeldetag: 04.08.88

(54) **Prüfvorrichtung.**

(30) Priorität: 07.08.87 DE 3726335

(43) Veröffentlichungstag der Anmeldung:
08.02.89 Patentblatt 89/06

(45) Bekanntmachung des Hinweises auf die
Patenterteilung:
25.09.91 Patentblatt 91/39

(84) Benannte Vertragsstaaten:
DE ES FR GB IT SE

(56) Entgegenhaltungen:
EP-A- 0 063 245
DE-A- 3 341 721
GB-A- 2 135 944

(73) Patentinhaber: Bayerische Motoren Werke
Aktiengesellschaft
Patentabteilung AJ-30 Postfach 40 02 40
Petuelring 130
W-8000 München 40 (DE)

(72) Erfinder: Angerer, Siegfried
Freienrieder Weg 2
W-8904 Friedberg (DE)

**Beschreibung**

Die Erfindung bezieht sich auf eine Prüfvorrichtung nach dem Oberbegriff des Patentanspruchs 1.

Eine derartige Prüfvorrichtung, wie sie beispielsweise aus der DE-PS 3341721 bekannt ist, ermöglicht eine Prüfung von Fahrzeugrädern unter realitätsnahen Bedingungen. Hierzu können beispielsweise Krafterzeuger und entsprechende Verstellvorrichtungen für die Achse des Fahrzeugrads vorgesehen sein, die dieses unter vorgegebenen Spur- und Sturzwinkel einstellen und mit definierten Seiten- und Radaufstandskräften belasten. Wesentlich bei der bekannten Prüfvorrichtung ist der zweckmäßigerweise um 10 bis 20% unterschiedliche Durchmesser von Trommel und Rad. Dies ermöglicht eine relative Drehbarkeit des Fahrzeugrads gegenüber der Trommel im Gegensatz zu einer ähnlichen, aus der DE-OS 3114714 bekannten Prüfvorrichtung, bei der das Fahrzeugrad in der Trommel fest eingespannt ist und die nach Art eines Umlaufbiegeprüfstands arbeitet.

Aufgabe der vorliegenden Erfindung ist es, die Prüfvorrichtung der eingangs genannten Art hinsichtlich ihrer Prüfmöglichkeiten weiterzubilden. Insbesondere soll es möglich werden, die Prüfvorrichtung auch als Bremsenprüfstand auszubilden. Wie bei der bekannten Prüfvorrichtung soll es auch hier möglich sein, realitätsnahe Prüfergebnisse mit geringem konstruktiven Aufwand zu erzielen.

Die Erfindung löst diese Aufgabe bei der Prüfvorrichtung durch die Merkmale, die im Kennzeichen des Patentanspruchs 1 angegeben sind.

Wesentlich ist nunmehr die Erweiterung der Prüfvorrichtung durch eine Kühlvorrichtung, die mit Hilfe der Luftleitkörper einen Kühlluftstrom erzeugt. Dieser ist im wesentlichen parallel zur Trommel- bzw. Radachse gerichtet und strömt durch die Öffnung, die zwischen der Trommelinnenfläche und dem Reifen gebildet wird. Diese Öffnung umschließt, bis auf die Aufstandsfläche des Fahrzeugreifens in der Trommel, das Fahrzeugrad nahezu vollständig. Durch die Kühlluftströmung ist es möglich, die Prüfvorrichtung beispielsweise als Bremsenprüfstand zu betreiben, da durch die Kühlluft eine ausreichende Abfuhr der erzeugten Reibungswärme erfolgt. Wesentlich für dieses Ergebnis ist die der Trommeldrehzahl proportionale Kühlluftströmung.

Vorteilhafte Ausgestaltungen der Erfindung sind in den weiteren Patentansprüchen beschrieben. So beinhalten die Patentansprüche 2 bis 6 konstruktive Gestaltungsmöglichkeiten für die Anordnung und Verstellbarkeit der Luftleitkörper, durch die es möglich wird, die Kühlluftströmung nicht nur durch die vorgegebene Drehzahlabhängigkeit, sondern auch durch Änderung der Orientierung der Luftleitkörper in der Intensität zu ändern.

Der Patentanspruch 7 beinhaltet eine Möglichkeit, die Kühlluftströmung noch weiter zu steigern.

Durch das zusätzliche Gebläse wird es damit möglich, auch einem erhöhten Kühlluftbedarf Rechnung zu tragen.

Die Merkmale der Patentansprüche 8 und 9 eröffnen die Möglichkeit, insbesondere bei Ausbildung der Prüfvorrichtung als Bremsenprüfstand durch Einbringen von entsprechenden Flüssigkeiten eine weitere Optimierung der Prüfergebnisse zu erzielen. Bei der Flüssigkeit kann es sich um Wasser oder um ein anderes Medium handeln, mit dem der Reibungswiderstand eines Fahrzeugreifens innerhalb der Trommel in definierter Weise beeinflußt wird.

Neben der besonders vorteilhaften Ausbildung der Prüfvorrichtung als Bremsenprüfstand ist es selbstverständlich auch möglich, die Prüfvorrichtung zur Untersuchung von Fahrzeugreifen oder des vollständigen Rades zu verwenden. Auch hier bietet die erfindungsgemäße Anordnung von Luftleitkörpern die Möglichkeit, das Temperaturverhalten des untersuchten Objekts in definierter Weise zu beeinflussen.

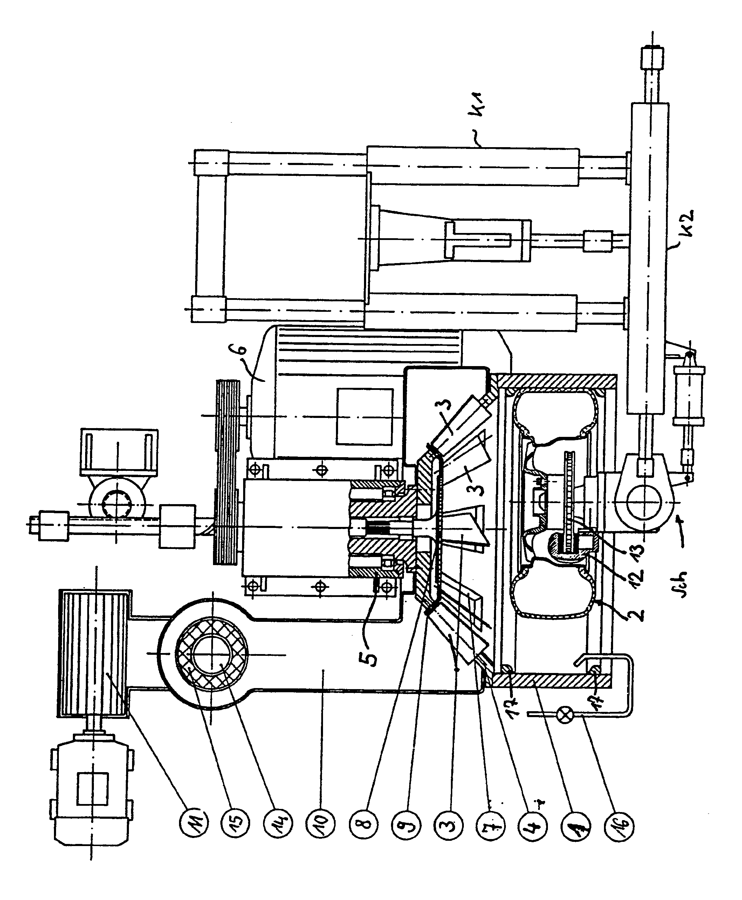

Ein Ausführungsbeispiel der Erfindung ist in der Zeichnung dargestellt.

Die einzige Figur zeigt in der Draufsicht und teilweise geschnitten einen zweiaxialen Bremsenprüfstand als Ausführungsbeispiel einer Prüfvorrichtung gemäß der Erfindung. In Ergänzung zu einer Prüfvorrichtung, die in ihren Grundzügen aus der DE-PS 3341721 bekannt ist, und deren wesentliche Merkmale in zwei hintereinander geschalteten Krafterzeugern K1 und K2 zum Aufbringen einer definierten Seiten- und Radaufstandskraft sowie einer ebenfalls aus dieser Druckschrift bekannten Einrichtung (Schwenkkopf Sch) zum Einstellen eines definierten Spur- und Sturzwinkels sowie einem definierten, um etwa 10 bis 20% verschiedenen Durchmesser zwischen einer Trommel 1 und einem darin enthaltenen Fahrzeugrad 2 bestehen, sind ergänzend Einrichtungen zum Erzeugen einer definierten Kühlluftströmung vorgesehen.

Es handelt sich dabei um Luftleitkörper 3, die in einem konischen Halte- und Verbindungsteil 4 zwischen der Trommel 1 und deren Lagerteil 5 angeordnet sind und die den Luftdurchsatz durch Lufteintrittsöffnungen 7 steuern. Im Lagerteil 5 erfolgt, wie ebenfalls sich aus der DE-PS 3341721 bekannt, zusätzlich der Antrieb der Trommel 1 mit Hilfe eines entsprechenden Antriebsmotors 6.

Die Luftleitkörper 3 sind drehbeweglich um eine Achse innerhalb des Verbindungsteiles 4 gelagert, die in der Mantellinie von diesen Konus verläuft. Sie sind mit Hilfe eines Stellrades 8 synchron verstellbar, das relativ zum Teil 4 durch eine nicht gezeigte Antriebsvorrichtung verdrehbar ist und das mit dem zahnradförmigen Ende 9 der Luftleitkörper 4 kämmt. Auf diese Weise ist es möglich, die Luftleitkörper 3 in ihrer Orientierung bezüglich des Teiles 4 und damit bezüglich der Trommel 1 zu verstellen und damit die grundsätzlich drehzahlproportionale Luftströmung zu beeinflussen.

Ergänzend ist ein Luftleitkanal 10 angeordnet, der an seinem strömungsseitigen Anfang ein Gebläse 11 besitzt und an dessen Ende die Luftleitkörper 4 liegen. Mit Hilfe des Gebläses 11 ist es damit möglich, die Luftströmung innerhalb des Luftleitkanals 10 in weiten Grenzen stufenlos zu variieren und den über die Luftleitkörper 4 durch die zwischen dem Fahrzeugrad 2 und der Trommel 1 gebildete Öffnung in weiten Grenzen zu steuern. Ferner ist es im Bedarfsfall auch möglich, die Luftleitkörper 3 sogar umzusteuern und damit die Richtung der Kühlluftströmung umzukehren. Damit wird es möglich, die durch Eingriff einer entsprechenden Bremseinrichtung (hier einer Faustsattelbremse 12) auf eine Bremsscheibe 13 entstehende Wärme gezielt abzuführen.

Ergänzend kann innerhalb des Luftleitkörpers 10 ein Flüssigkeits- z.B. Wasserabscheider 14 mit einem Abscheidungsfilter 15 angeordnet sein, dessen vorzugsweise dampfförmig ausgeschiedene Flüssigkeit mit Hilfe des Kühlluftstroms auf das Fahrzeugrad 2 und die Innenseite der Trommel 1 geführt wird, sich dort niederschlägt und den Reibungskoeffizienten zwischen Trommel 1 und Fahrzeugrad 2 in definierter Weise beeinflußt. Ergänzend kann ferner ein weiterer Flüssigkeitsabscheider 16 angeordnet sein, der einen direkt auf die Innenfläche der Trommel 1 gerichteten Flüssigkeitsstrahl erzeugt und der diesen Reibungskoeffizienten noch weiter in definierter Weise beeinflußt.

Auf diese Weise ist es möglich, ggf. durch Verwendung des bzw. der Wasserabscheider 14 u. 16 sowie durch entsprechende Einstellung des Kühlluftstroms eine definierte Untersuchung des Fahrzeugrads 2 allein oder im Zusammenspiel mit weiteren Elementen, wie beispielsweise der Fahrzeugbremse zu untersuchen und im Labormaßstab eine wirklichkeitsnahe Aussage über das Verhalten des Probanden zu erreichen. Der konstruktive Aufwand hierfür ist, wie ohne weiteres zu erkennen, gering. Die Verschmutzung in der Umgebung der Prüfvorrichtung ist, wie ohne weiteres zu erkennen, gering, da die eingebrachte Flüssigkeit nahezu vollständig auf die Trommel bzw. das Fahrzeugrad aufgebracht wird und innerhalb der Trommel gleichsam festgehalten wird. Anlaufringe 17, wie an sich ebenfalls aus der DE-PS 3341721 bekannt sind, unterstützen dieses Festhalten der Flüssigkeit innerhalb der Trommel zusätzlich.

Damit wird es möglich, bei der Ausbildung der Prüfvorrichtung als Bremsenprüfstand eine Bremsenerprobung unter fahrzeuggerechten Bedingungen mit der gleich zeitigen Berücksichtigung von Festigkeit und Funktion zu erzielen. Es ist weiter möglich, eine komplexe, d.h. auf mehrer Teile bezogene Prüfmöglichkeit bei relativ geringer Investition zu erzielen. Durch die hier vorliegend relativ geringe Relativgeschwindigkeit zwischen Fahrzeugrad und Trommel ist der Reifenverschleiß wesentlich geringer als bei einer Prüfvorrichtung, bei der das Fahrzeugrad auf der Außenseite einer Trommel abläuft.

## Patentansprüche

1. Prüfvorrichtung für in einer umlaufenden Trommel relativ zu dieser drehbare Fahrzeugräder, **dadurch gekennzeichnet**, daß Luftleitkörper (3) zum Erzeugen einer der Drehzahl der Trommel (1) entsprechenden Luftströmung mit der Trommel (1) verbunden sind.

2. Prüfvorrichtung nach Anspruch 1, dadurch gekennzeichnet, daß die Luftleitkörper (3) in ihrer Orientierung bezüglich der Trommel verstellbar sind.

3. Prüfvorrichtung nach Anspruch 2, dadurch gekennzeichnet, daß die Luftleitkörper (3) symmetrisch bezüglich der Trommel (1) angeordnet und synchron verstellbar sind.

4. Prüfvorrichtung nach Anspruch 3, gekennzeichnet durch ein zur Trommelachse koaxiales Stellrad (8) für die Luftleitkörper (3).

5. Prüfvorrichtung nach einem der Ansprüche 1 bis 4, dadurch gekennzeichnet, daß die Luftleitkörper (3) zwischen dem Trommellager (5) und der Trommel (1) selbst angeordnet sind.

6. Prüfvorrichtung nach Anspruch 5, dadurch gekennzeichnet, daß die Luftleitkörper (3) in einem konischen Verbindungsteil (4) zwischen dem Trommellager (5) und der Trommel (1) sitzen und den Luftdurchsatz durch Lufteintrittsöffnungen (7) steuern.

7. Prüfvorrichtung nach einem der Ansprüche 1 bis 6, dadurch gekennzeichnet, daß die Luftleitkörper (3) am — strömungsmäßig gesehen — Ende eines Luftkanals (10) stehen, in dem ein Gebläse (11) für eine zu den Luftleitkörpern (3) gelangende und durch diese in die Trommel (1) gelenkte Luftströmung enthalten ist.

8. Prüfvorrichtung nach Anspruch 7, dadurch gekennzeichnet, daß zwischen dem Gebläse (11) und den Luftleitkörpern (3) ein Flüssigkeitsabscheider (14) im Luftkanal angeordnet ist.

9. Prüfvorrichtung nach einem der Ansprüche 1 bis 8, gekennzeichnet durch einen zusätzlichen Flüssigkeitsabscheider (16), der einen auf die Trommeloberfläche gerichteten Flüssigkeitsstrahl erzeugt.

## Claims

1. A testing device for vehicle wheels which are rotatable in a revolving drum relative to the latter, characterised in that air-conducting elements (3) for generating an air current corresponding to the rotational speed of the drum (1) are connected with the drum (1).

2. A testing device according to Claim 1, characterised in that the air-conducting elements (3) are adjustable in their orientation with respect to the drum.

3. A testing device according to Claim 2, characterised in that the air-conducting elements (3) are arranged so as to be symmetrical with respect to the drum (1) and are adjustable in synchronism.

4. A testing device according to Claim 3, characterised by a regulator wheel (8), coaxial to the drum axis, for the air conducting elements (3).

5. A testing device according to one of Claims 1 to 4, characterised in that the air-conducting elements (3) are arranged between the drum bearing (5) and the drum (1) itself.

6. A testing device according to Claim 5, characterised in that the air-conducting elements (3) sit in a conical connecting part (4) between the drum bearing (5) and the drum (1) and control the throughput of air through air inlet openings (7).

7. A testing device according to one of Claims 1 to 6, characterised in that the air-conducting elements (3) stand at the end — viewed in terms of the flow — of an air channel (10) in which a fan (11) is contained for an air current reaching the air-conducting elements (3) and directed through the latter into the drum (1).

8. A testing device according to Claim 7, characterised in that, between the fan (11) and the air-conducting elements (3), a liquid separator (14) is arranged in the air channel.

9. A testing device according to one of Claims 1 to 8, characterised by an additional liquid separator (16) which produces a liquid jet directed onto the surface of the drum.

## Revendications

1. Dispositif d'essai pour des roues de véhicule pouvant tourner dans un tambour tournant par rapport à celui-ci, caractérisé en ce que des éléments de guidage d'air (3) sont reliés au tambour (1) pour créer un courant d'air fonction de la vitesse de rotation du tambour (1).

2. Dispositif d'essai selon la revendication 1, caractérisé en ce que les éléments de guidage d'air (3) sont réglables en orientation par rapport au tambour.

3. Dispositif d'essai selon la revendication 2, caractérisé en ce que les éléments de guidage d'air (3) sont disposés symétriquement par rapport au tambour (1) et sont réglables en synchronisme.

4. Dispositif d'essai selon la revendication 3, caractérisé par une roue de réglage (8) coaxiale au tambour (1) pour les éléments de guidage d'air (3).

5. Dispositif d'essai selon l'une des revendications 1 à 4, caractérisé en ce que les éléments de guidage d'air (3) sont disposés entre le support du tambour (5) et le tambour (1) lui-même.

6. Dispositif d'essai selon la revendication 5, caractérisé en ce que les éléments de guidage d'air (3) sont placés dans une partie de liaison conique (4) entre le support du tambour (5) et le tambour (1) et dirigent le passage de l'air à travers les ouvertures d'entrée d'air (7).

7. Dispositif d'essai selon une des revendications 1 à 6, caractérisé en ce que les éléments de guidage d'air (3) sont situés — vu dans le sens du courant — à l'extrémité d'un canal d'air (10), dans lequel est contenu un ventilateur (11) destiné à créer un courant d'air arrivant aux éléments de guidage d'air (3) et guidé par ceux-ci dans le tambour (1).

8. Dispositif d'essai selon la revendication 7, caractérisé en ce qu'entre le ventilateur (11) et les éléments de guidage d'air (3) est placé dans le canal d'air un collecteur de liquide (14).

9. Dispositif d'essai selon l'une des revendications 1 à 8, caractérisé par un collecteur de liquide supplémentaire (16) qui produit un jet de liquide dirigé sur la surface du tambour.